# EUROPÄISCHE PATENTANMELDUNG

(11) **EP 1 522 375 A1**
(43) Veröffentlichungstag der Anmeldung: **13.04.2005**
(21) Anmeldenummer: 03022634.4
(22) Anmeldetag: 06.10.2003
(51) Int. Cl.: B23P 6/00, F01D 5/00, C23C 4/08

(54) **Verfahren zur Herstellung eines Schichtsystems**

(71) Anmelder: SIEMENS AKTIENGESELLSCHAFT, 80333 München (DE)
(72) Erfinder: Anton, Reiner, 47443 Moers (DE); Bähr, Christian, 47447 Moers (DE); Heinecke, Brigitte, 45468 Mülheim (DE); Ott, Michael, Dr., 45478 Mülheim (DE)

(57) **Zusammenfassung**

Nach dem Stand der Technik werden Vertiefungen und/oder Risse mit einem Lot aufgefüllt, das mit einer nachfolgend aufgebrachten Beschichtung Sprödphasen bildet, die die mechanischen Eigenschaften negativ beeinflussen.

Durch das erfindungsgemäße Verfahren wird dem Lot (13) der Bestandteil entzogen, der Sprödphasen (16) bildet. Dies erfolgt durch Aufbringen eines zweiten Materials (22), das ebenfalls mit dem Bestandteil reagiert, und vor der Beschichtung (7) mit den Sprödphasen (16) wieder entfernt wird.

## Beschreibung

Die Erfindung betrifft ein Verfahren zum Herstellen eines Schichtsystems nach dem Oberbegriff des Anspruchs 1 und Bauteil gemäss Anspruch 15.

Turbinenschaufeln sowie andere Bauteile für Hochtemperaturanwendungen weisen nach langer Benutzung vielfach Risse oder Bereiche auf, in denen Korrosion auftrat, wobei diese Risse oder Bereiche im Rahmen einer Aufarbeitung der Bauteile entfernt werden müssen, wodurch dort jeweils eine Vertiefung entsteht.
Die Risse oder die Vertiefung werden dann mit einem Lot aufgefüllt.
Das mehrkomponentige Lot enthält u.a. Schmelzpunkterniedriger (z.B. Bor) oder andere Bestandteile, die, wie Untersuchungen im Rahmen der vorliegenden Erfindung ergeben haben, mit einer aufzutragenden abschließenden Beschichtung (z.B. Korrosionsschutzschicht, Wärmeschutzschicht) Sprödphasen (z.B. Chromborid) bilden.
Solche Schichtsysteme weisen daher schlechte mechanische Eigenschaften, insbesondere bei hohen Temperaturen, auf.
Auch wird die Oxidations- und Korrosionsschutzfunktion der Beschichtung verringert.

Es ist daher Aufgabe der Erfindung ein Verfahren und ein Bauteil aufzuzeigen, das diese Eigenschaften des Schichtsystems mit einer unterliegenden aufgefüllten Vertiefung verbessert.

Die Erfindung beruht auf der Erkenntnis, dass eine Komponente des Lots mit einer nachfolgend aufgebrachten Beschichtung in unerwünschter Weise reagiert.

Die Aufgabe wird gelöst durch ein Verfahren gemäss Anspruch 1, indem in einem Zwischenschritt ein zweites Material aufgebracht wird, das mit dem ersten Material, beispielsweise einem Lot, beispielsweise reagiert und die unerwünschten Bestandteile des ersten Materials dadurch entzieht, dass es zumindest teilweise Verbindungen mit diesem bildet.
Das zweite Material wird dann zusammen mit den aus dem ersten Material herausgelösten unerwünschten Bestandteilen wieder entfernt, also geopfert. So enthält die Begrenzungsfläche des ersten Materials zu der Beschichtung keine Bestandteile mehr, die mit dem Material einer noch aufzubringenden Beschichtung in unerwünschter Weise reagieren können.

Das zweite Material kann aber auch das erste Material nur bedecken und einen Abstand zu der noch aufzubringenden Schicht schaffen, der eine Reaktion von Bestandteilen des ersten Materials mit der Beschichtung verhindert oder deutlich reduziert. Die Beschichtung aus dem zweiten Material stellt somit eine Diffusionsbarriere oder -schwelle dar.

Die Aufgabe wird weiterhin gelöst durch ein Bauteil gemäss Anspruch 15.

In den Unteransprüchen sind weitere vorteilhafte Maßnahmen aufgelistet.
Die in den Unteransprüchen aufgelisteten Maßnahmen können in vorteilhafter Weise miteinander kombiniert werden.

In den Figuren ist ein Ausführungsbeispiel erläutert.

Es zeigen
- Figur 1: ein Schichtsystem nach dem Stand der Technik,
- Figuren 2 bis 6: Verfahrensschritte des erfindungsgemäßen Verfahrens,
- Figur 7: eine Gasturbine,
- Figur 8: eine Brennkammer und
- Figur 9: eine Dampfturbine.

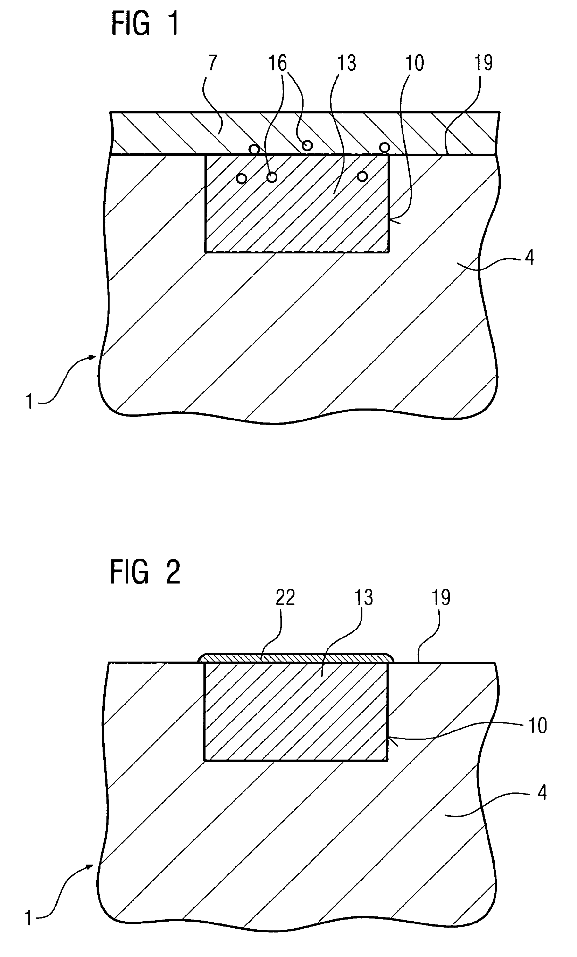

Figur 1 zeigt ein Schichtsystem 1, das zumindest aus einem Substrat 4 und zumindest einer Schicht 7 besteht.

Das Schichtsystem 1 ist beispielsweise ein Bauteil einer Dampf- oder Gas- 100 Turbine (Schaufel 120, 130, Brennkammerauskleidung 155,..).
Das Substrat 4 ist daher beispielsweise eine nickel- oder kobaltbasierte Superlegierung, d.h. metallisch. Das Substrat 4 kann auch keramisch sein.
Die Beschichtung 7 ist keramisch oder metallisch und besteht beispielsweise aus einer MCrAIX-Legierung. M steht für zumindest ein Element der Gruppe Fe (Eisen), Co (Kobalt) oder Ni (Nickel). X steht für Yttrium und/oder zumindest ein Element der Seltenen Erden.

Das Substrat 4 weist eine Vertiefung 10 (Riss, Vertiefung, Ausfräsung) auf, beispielsweise bedingt durch den langen Betriebseinsatz eines Bauteils oder durch die Art der Herstellung.
Eine ordnungsgemäße Beschichtung des Substrats 4 ist in diesem Zustand noch nicht möglich.
Die Vertiefung 10 wird vorher gegebenenfalls gereinigt (Entfernung von Oxiden) und danach aufgefüllt mit einem ersten mehrkomponentigen Material 13. Dies ist beispielsweise ein Lot 13.
Lote 13 enthalten beispielsweise als Schmelzpunkterniedriger Komponenten, die bei höheren Temperaturen mit der Beschichtung 7 reagieren.
Schmelzpunkterniedriger sind oft notwendig, damit das Lot niedrigviskos wird und in einen schmalen Riss gut eindringen kann und vollständig auffüllt.
Beispielsweise enthält das Lot 13 Bor (B) oder borhaltige Verbindungen, die mit dem Chrom (Cr) der MCrAlX-Schicht 7 Chromboridphasen 16 bilden, die spröd sind und das mechanische Verhalten und/oder das Korrosionsschutzverhalten negativ beeinflussen.

Diese unerwünschten Phasen 16 bilden sich bei einer Reaktion von zumindest einer Komponente (Schmelzpunkterniedriger) des ersten mehrkomponentigen Materials 13 mit der Beschichtung 7 bei einer folgenden Wärmebehandlung oder während des betrieblichen Einsatzes.
Dabei diffundiert Bor in die Beschichtung 7 und/oder Chrom aus der Beschichtung 7 in die Vertiefung 10 mit dem Material 13.

Figur 2 zeigt einen ersten Schritt des erfindungsgemäßen Verfahrens.
Die Vertiefung 10 ist bereits mit dem Lot 13 aufgefüllt und ggf. durch eine Lötwärmebehandlung mit dem Substrat 4 verbunden. Hier ist der Schmelzpunkterniedriger in dem Material 13 noch erwünscht, um eine Anbindung des Materials 13 an das Substrat 4 in der Vertiefung 10 zu erzielen.

Auf einer Oberfläche 19 des Substrats 4 zumindest im Bereich der Vertiefung 10 wird ein zweites Material 22 aufgebracht und bildet eine Beschichtung. Die Dicke dieser Schicht aus dem Material 22 ist beispielsweise dünner als die noch aufzubringende Beschichtung 7.
Das zweite Material 22 ist beispielsweise Chrom, eine chromhaltige Verbindung oder Legierung oder eine Legierung anderer Metalle. Andere Materialien sind denkbar.
Das zweite Material 22 kann durch Pasten, Schlicker, Bänder (Tapes), Plasmaspritzen usw. aufgebracht werden, die zumindest einen hohen Anteil des zweiten Materials 22 aufweisen.

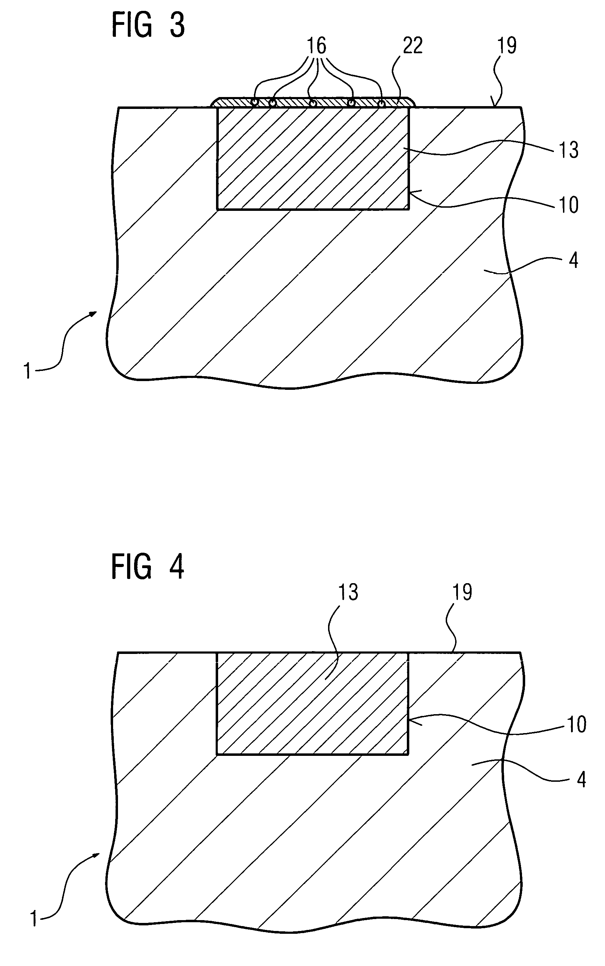

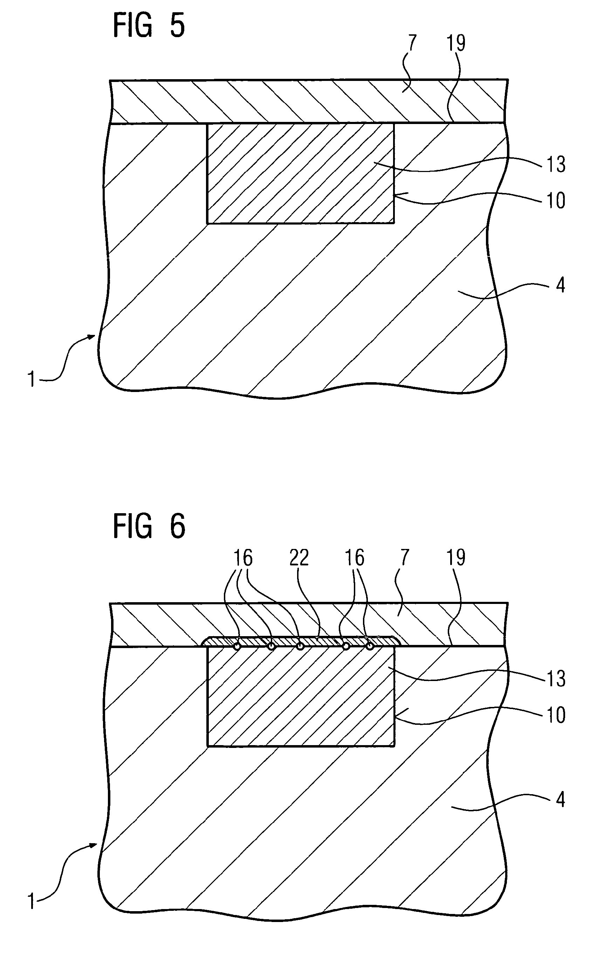

Durch eine Entfernungswärmebehandlung, insbesondere durch eine separate Diffusionswärmebehandlung bei hohen Temperaturen, aber alternativ beispielsweise auch gleichzeitig bei obiger Lötwärmebehandlung, bei der das Substrat 4 mit dem ersten Material 13 und dem zweiten Material 22 erhitzt wird, bilden sich Phasen (Verbindungen) 16 (Fig. 3), beispielsweise in Form von Ausscheidungen, wodurch dem ersten Material 13 zumindest eine unerwünschte Komponente entzogen wird, die mit der noch aufzubringenden Beschichtung 7 (Fig. 5) unerwünschte Phasen 16 bildet.
Solche Phasen sind beispielsweise Chromboride, die sich mit dem noch nach der Lötwärmebehandlung ungebundenen Bor bilden. Auch interstitiell (ein Gitter) gelöstes Bor in dem Material 22 ist denkbar.
Die Phasen 16 können sich in dem Material 22 und/oder in dem Material 13 in der Vertiefung 10 bilden.
Das Material 22 ist daher beispielsweise ein Bestandteil der Beschichtung 7, beispielsweise Chrom der MCrAIX-Beschichtung. Es kann jedoch auch ein Material gewählt werden, das keine Elemente oder Bestandteile der Beschichtung 7 enthält. Es muss nur mit der zumindest einen unerwünschten Komponente des ersten Materials 13 reagieren können, die sonst mit der Beschichtung 7 in unerwünschter Weise reagieren würde.

Eine Beschichtung kann in diesem Zustand (Fig. 6) erfolgen, weil das zweite Material 22 die unerwünschten Komponenten des ersten Materials 13 in Form von Verbindungen fest bindet, wodurch keine oder kaum noch eine Reaktion mehr mit dem Material der Beschichtung 7 erfolgen kann. Die Beschichtung mit dem Material 22 stellt auch eine Diffusionsbarriere oder - schwelle für noch diffundierende unerwünschte Komponenten dar.

Das zweite Material 22 und/oder Material 13 mit den Sprödphasen 16 kann aber auch entfernt werden (Fig. 4), insbesondere durch Abschleifen.

Danach erfolgt die Beschichtung 7 (Fig. 5).
Auch durch folgende Wärmebehandlungen des Substrats 4 entstehen keine Sprödphasen in der Beschichtung 7, da das erste Material 13 zumindest in der Nähe der Oberfläche 19 kaum oder keine unerwünschten Komponenten mehr enthält, die mit dem Material der Beschichtung 7 zu unerwünschten Verbindungen reagieren.

Das Bauteil, das so hergestellt wird, kann ein neu gefertigtes Bauteil oder ein gebrauchtes Bauteil sein. Insbesondere bei Reparaturlöten von Bauteilen (Refurbishment) findet das Verfahren seine Anwendung.
Dabei findet vorab ein Entschichten statt. Die Fehler (Risse) werden nach dem Verfahren repariert und ggf. wieder beschichtet, insbesondere mit einer MCrAlX und einer keramischen Wärmedämmschicht darauf.

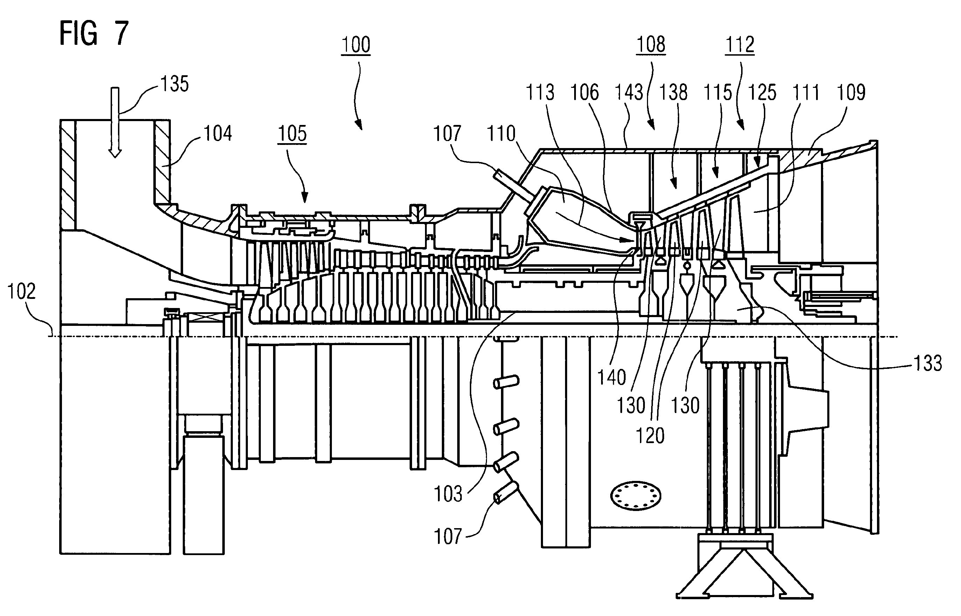

Die Figur 7 zeigt eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109. Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAIX; M = Fe, Co, Ni, X=Y, Seltenen Erden) und Wärme (Wärmedämmschicht, beispielsweise ZrO₂, Y₂O₄-ZrO₂) aufweisen.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

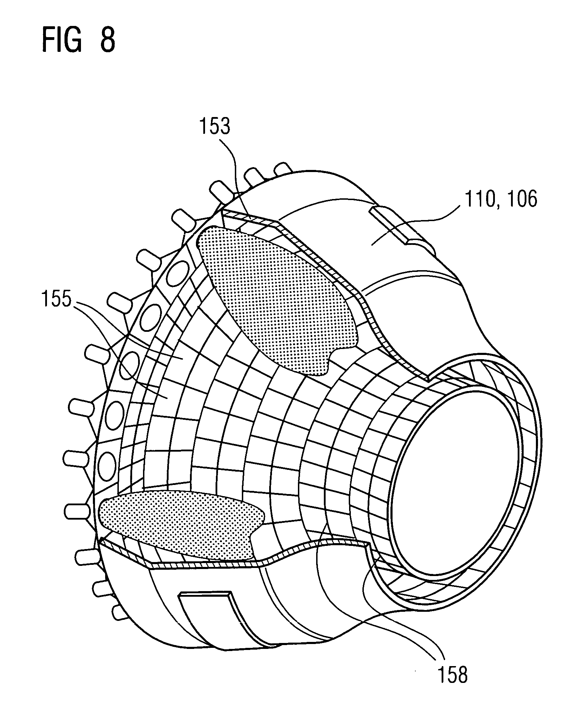

Die Figur 8 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Herstellen eines Schichtsystems (1) mit einem Substrat (4),
wobei das Substrat (4) eine aufzufüllende Vertiefung (10) aufweist,
die mit einem ersten mehrkomponentigen Material (13) so aufgefüllt wird,
dass dann eine Beschichtung (7) des Substrats (4) zumindest im Bereich der aufgefüllten Vertiefung (10) erfolgen kann,
wobei das erste mehrkomponentige Material (13) zumindest eine unerwünschte Komponente enthält,
die eine Eigenschaft der Beschichtung (7) verschlechtert, wenn die zumindest eine unerwünschte Komponente in die Beschichtung (7) diffundiert,
**dadurch gekennzeichnet, dass**
in einem Zwischenschritt ein zweites Material (22) zumindest im Bereich der aufgefüllten Vertiefung (10) aufgebracht wird,
so dass die unerwünschte Komponente kaum oder gar nicht mehr in die Beschichtung (7) diffundiert.

2. Verfahren nach Anspruch 1,
**dadurch gekennzeichnet, dass**
das zweite Material (22) die unerwünschte Komponente des mehrkomponentigen Materials (13) in der Vertiefung (10) abdeckt und so als Diffusionsbarriere wirkt.

3. Verfahren nach Anspruch 1,
**dadurch gekennzeichnet, dass**
in einem Zwischenschritt eine Entfernungswärmebehandlung durchgeführt wird,
so dass aus dem ersten mehrkomponentigen Material (13) in der Vertiefung zumindest eine unerwünschte Komponente zumindest teilweise in das zweite Material (22) gelangt.

4. Verfahren nach Anspruch 3,
**dadurch gekennzeichnet, dass**
das zweite Material (22) zusammen mit der aus dem ersten Material (13) entfernten zumindest einen unerwünschten Komponente nach der Entfernungswärmebehandlung und vor der Beschichtung des Substrats (4) mit der Beschichtung (7) entfernt wird,
insbesondere durch eine Schleifbehandlung.

5. Verfahren nach Anspruch 1,
**dadurch gekennzeichnet, dass**
das erste mehrkomponentige Material (13) ein Lot ist,
das als zumindest eine Komponente zumindest einen Schmelzpunkterniedriger als unerwünschte Komponente aufweist.

6. Verfahren nach Anspruch 5,
**dadurch gekennzeichnet, dass**
der Schmelzpunkterniedriger aus Bor besteht oder Bor enthält.

7. Verfahren nach Anspruch 1,
**dadurch gekennzeichnet, dass**
mit dem ersten Material (13) vor dem Aufbringen der Beschichtung (7) eine Lötwärmebehandlung durchgeführt wird,
wodurch sich das erste Material (13) mit dem Substrat (4) in der Vertiefung (10) verbindet.

8. Verfahren nach Anspruch 3 oder 7,
**dadurch gekennzeichnet, dass**
als Entfernungswärmebehandlung eine Diffusionswärmebehandlung oder eine Lötwärmebehandlung durchgeführt wird.

9. Verfahren nach Anspruch 1,
**dadurch gekennzeichnet, dass**
als Substrat (4) eine Eisen-, Nickel- oder Kobalt-basierte Superlegierung verwendet wird.

10. Verfahren nach Anspruch 1,
**dadurch gekennzeichnet, dass**
als Beschichtung (7) eine MCrAIX-Legierung verwendet wird,
wobei M zumindest ein Element der Gruppe Fe, Co oder Ni ist,
und X Yttrium und/oder zumindest ein Element der Seltenen Erden ist.

11. Verfahren nach Anspruch 1,
**dadurch gekennzeichnet, dass**
die Schichtdicke der Beschichtung mit dem zweiten Material (22) im Vergleich zur Beschichtung (7) dünn ist.

12. Verfahren nach Anspruch 1, 2 oder 3,
**dadurch gekennzeichnet, dass**
als zweites Material (22) Chrom oder chromhaltige Verbindungen oder Legierungen verwendet werden.

13. Verfahren nach Anspruch 1, 2 oder 3,
**dadurch gekennzeichnet,**
**dass** das erste mehrkomponentige Material (13) zumindest eine unerwünschte Komponente enthält,
die eine unerwünschte Verbindung mit der Beschichtung (7) bildet,
und **dass** das zweite Material (22) während der Entfernungswärmebehandlung mit der zumindest einen unerwünschten Komponente des ersten mehrkomponentigen Materials (13) eine Verbindung bildet.

14. Verfahren nach Anspruch 1,
**dadurch gekennzeichnet, dass**
das zweite Material (22) durch eine Paste, einen Schlicker, ein Band oder andere Verfahren aufgebracht wird.

15. Bauteil, das nach einem oder mehreren der Ansprüche 1 bis 14 hergestellt wurde.

16. Bauteil nach Anspruch 15,
**dadurch gekennzeichnet, dass**
das Bauteil ein Turbinenbauteil einer Gasturbine (100) oder Dampfturbine ist.

17. Bauteil nach Anspruch 15, 16,
**dadurch gekennzeichnet, dass**
das Bauteil (1) eine Turbinenschaufel (120, 130) ist.

18. Bauteil nach Anspruch 15, 16,
**dadurch gekennzeichnet, dass**
das Bauteil (1) eine Brennkammerauskleidung (155) ist.

19. Bauteil nach den Ansprüchen 15 bis 18,
**dadurch gekennzeichnet, dass**
das Bauteil (1) nach seinem Einsatz gemäss einem oder mehreren der Ansprüche 1 bis 15 wiederaufgearbeitet wird.

20. Bauteil nach den Ansprüchen 15 bis 19,
**dadurch gekennzeichnet, dass**
das Bauteil (1) ein Neubauteil ist.

21. Bauteil nach den Ansprüchen 15 bis 20,
**dadurch gekennzeichnet, dass**
das Bauteil (1) eine keramische Wärmedämmschicht aufweist.
